# EUROPÄISCHE PATENTSCHRIFT

(11) **EP 3 511 088 B1**
(45) Veröffentlichungstag und Bekanntmachung des Hinweises auf die Patenterteilung: **07.10.2020**
(21) Anmeldenummer: 18151775.6
(22) Anmeldetag: 16.01.2018
(51) Int. Cl.: B21J 1/06, B23P 15/14, F16H 25/24

(54) **GEWINDESPINDEL**
ELEVATING SCREW
BROCHE FILETÉE

(43) Veröffentlichungstag der Anmeldung: 17.07.2019
(73) Patentinhaber: SFS Intec Holding AG, 9435 Heerbrugg (CH)
(72) Erfinder: PENZ, Björn, 9445 Rebstein (CH); HUTTER, Pascal, 9444 Diepoldsau (CH); ZACH, Marijo, 9443 Widnau (CH); RENHARD, Patrick, 6811 Göfis (AT)

(56) Entgegenhaltungen:
- DE-A1-102006 059 050
- DE-A1-102015 221 842

## Beschreibung

Die vorliegende Erfindung bezieht sich auf ein Bauteil mit einem Gewinde, insbesondere einer Gewindespindel und der Verwendung einer spezifischen Stahlsorte zur Herstellung einer Gewindespindel.

### TECHNISCHER HINTERGRUND

Ein Gewinde ist, in grundlegender Definition, eine profilierte Einkerbung, die wendelartig um eine zylindrisch oder zylinderähnlich geformte Wand eines Bauteils in einer geschlossenen Schraubenlinie (Helix) verläuft. Eine Spindel sei hierbei als zylindrisches Bauteil verstanden mit einem gleichförmigen Aussengewinde. Das passende Gegenstück hierzu ist eine Mutter mit einer in Bezug auf Gewindetiefe, Gewindeform und Gewindesteigung komplementären Auslegung.

Im Stand der Technik sind unzählige Gewindeformen, Gewindegrössen und Anwendungen bekannt. Ein Spezialfall eines Spindel-Mutter-Systems ist ein Kugelgewindetrieb, bei dem Innen- und Aussengewinde als halbschalige Rillen ausgebildet sind und im Zwischenraum zwischen Spindel und Mutter Kugeln umlaufen.

Spindel-Muttersysteme und Kugelgewindetriebe werden in vielen technischen Anwendungen eingesetzt, häufig auch, um eine Drehbewegung in eine lineare Bewegung umzusetzen. Als solche kommen Spindel-Muttersysteme und Kugelgewindetriebe auch in Bremssystemen von Fahrzeugen zum Einsatz, wo sie als Ersatz für hydraulische Bremszylinder oder parallel zu Bremssystemen als Betätigungselement von Bremsassistenzsystemen eingesetzt werden.

### STAND DER TECHNIK

DE102015221842 zeigt ein Getriebeteil mit einem zylindrischen tragenden ersten Bereich.

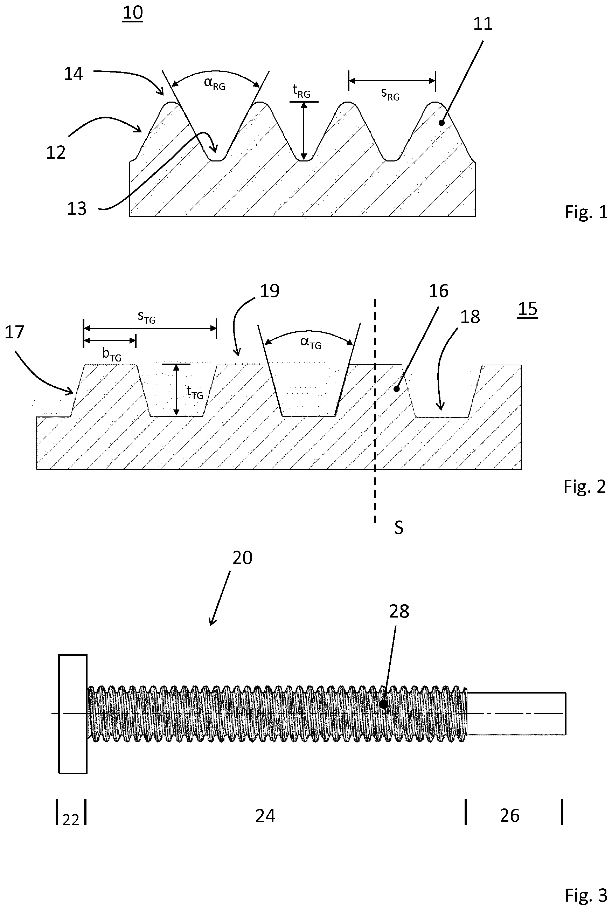

Die Figuren 1 und 2 zeigen einige grundlegende Bestimmungsgrössen zur Charakterisierung von Gewinden. Gezeigt ist jeweils ein axialer Längsschnitt durch einen Gewindeabschnitt. Figur 1 zeigt ein Regelgewinde bzw. Spitzgewinde. Der Abstand zweier Gewindegänge (Gewindekerben) entspricht der Steigung s_{RG} (RG für Regelgewinde). Die Gewindetiefe ist mit t_{RG}, der Flankenwinkel mit α_{RG} bezeichnet. Merkmal 11 bezeichnet einen Gewindezahn , die Gewindeflanke ist mit 12 gekennzeichnet. Der Gewindegrund 13 und die Gewindespitze 14 sind auch massgeblich für den Kerndurchmesser bzw. den Aussendurchmesser des Gewindes. Figur 2 zeigt ein Trapezgewinde, die Kenngrössen sind hier mit dem Suffix TG für Trapezgewinde gekennzeichnet. Wegen der trapezoidalen Form eines Gewindezahns 16 ist die Gewindespitze 19 flächig ausgebildet mit einer Breite b_{TG}. Referenz 18 bezeichnet wiederum den Gewindegrund und 17 bezieht sich auf die Gewindeflanke. Die in Figur 1 und 2 exemplarisch gezeigten Gewindetypen sind idealisiert gezeichnet, eingängig und symmetrisch. Die Zeichnungen sind jedoch nicht limitierend für die Erfindung.

Die Massenfertigung von Gewindespindeln geschieht heute durch Umformen eines Rohlings aus geeignetem Werkstoff, z.B. Stahl. Ausgangsmaterial ist häufig Draht mit entsprechendem Durchmesser, der gerade gerichtet und passend abgelängt wird. Durch Kaltumformung, insbesondere Gewinderollen, wird das Gewinde in den Rohling eingeformt. Häufig werden noch die Enden der Gewindespindel durch Kaltumformung oder Zerspanung bearbeitet, um z.B. eine Kraftübertragung an weitere Maschinenelemente zu erleichtern oder Flächen für Lager zu bieten.

Es liegt auf der Hand, dass das Ausgangsmaterial bzw. der Rohling bevorzugt eine nicht zu hohe Materialfestigkeit aufweisen soll, um die bei der Kaltumformung aufzuwendenden Kräfte niedrig zu halten. Daher werden häufig Stähle mit Ferrit / Perlit Gefüge (e.g. 34Cr4) verwendet, die durch Glühen auf kugeligen Zementit (GKZ) vorbehandelt wurden. Der dabei auftretende Härteabfall verbessert die spätere Umformbarkeit bzw. die Zerspanbarkeit.

Es ist eine bekannte Tatsache, dass durch die bei der Kaltumformung auftretende Kaltverfestigung die Werkstofffestigkeit erneut ansteigt. Um das Werkstück auf die notwendige Endhärte zu bringen, ist es dennoch üblich eine Wärmebehandlung durchzuführen, üblicherweise durch Umwandlungshärten oder Vakuumhärten. Dadurch werden auch nicht kaltumgeformte Werkstückbereiche gehärtet.

Nachteilig ist hierbei generell, dass für den Härtevorgang die umgeformten Bauteile, hier die Spindelmutter, mit hohem Energie- und Apparateaufwand aufgeheizt und danach abgeschreckt werden müssen. Um unerwünschte stoffliche Veränderungen des Materials zu vermeiden ist es teilweise erforderlich, den Glühvorgang unter Vakuum oder Schutzgas vorzunehmen. Der Abschreckvorgang erfolgt häufig in Öl, was eine aufwändige spätere Reinigung der Bauteile erfordert. Zudem kann durch das Aufheizen und Abschrecken der Bauteile die Masshaltigkeit nicht immer gewährleistet werden.

Daher wurde in den vergangenen Jahren verstärkt vorgeschlagen, bainitische Stähle zu verwenden, die einerseits eine grösserer Ausgangsfestigkeit aufweisen, andererseits nach der Kaltumformung auch ohne anschliessende Wärmebehandlung eine Endfestigkeit Rₘ von 800 bis 1000 MPa oder darüber erreichen können. Die verwendeten Maschinen und Werkzeuge müssen jedoch entsprechend ausgelegt sein, um die höhere Grundfestigkeit des Ausgangsmaterials umformen zu können.

Bei der Herstellung von Stahl besteht oberhalb von 900°C ein typischer kohlenstoffarmer Stahl vollständig aus Austenit. Unterhalb von etwa 700°C ist der Austenit thermodynamisch instabil und wird unter Gleichgewichtsbedingungen (also bei langsamer Abkühlung) u.a.Perlit bilden - eine mehr oder weniger lamellar ausgeprägte Struktur aus Ferrit und Zementit (Fe₃C), wobei dies auch von der chemischen Zusammensetzung des Stahls abhängt. Austenit, der sehr schnell abgekühlt wird, kann Martensit ohne irgendeine Diffusion von Kohlenstoff bilden. Diese Nicht-Gleichgewichtsphase kann sich nur bei niedrigen Temperaturen bilden, wobei der Phasenanteil nur vom Grad der Abkühlung unterhalb der kritischen Martensit-Starttemperatur abhängt.

Bainit besetzt bzgl. des Entstehungsmechanismus und der Gefügemorphologie einen Bereich zwischen der zuvor genannten Perlit - und Martensitstufe (etwa zwischen 200 bis 600°C). Bainit bildet sich aus dem Austenit in Form nichtlamellarer Ferrit-Carbid-Aggregate. Es existiert eine Reihe verschiedener bainitischer Gefüge deren Ausbildungsform von der Stahlzusammensetzung und der Bildungstemperatur abhängig ist. Man unterscheidet oft noch zwischen dem sogenanntem unteren Bainit, der sich bei Temperaturen nahe der Martensit-Starttemperatur bildet, und dem oberem Bainit , der sich bei höheren Temperaturen bildet. Eine mögliche/genauere Einteilung des bainitischen Gefüge in Abhängigkeit des Kohlenstoffgehaltes der Stähle kann nach EUR 21245 (Abschlussbereicht 2005) erfolgen.

Ein kommerziell erhältlicher Stahl wie Swissbain-7MnB8 (Werkstoffnummer 1.5519) ist ein mit Titan, Vanadium und Niob mikrolegierter Stahl mit niedrigem Kohlenstoffgehalt. Er besitzt dadurch ein zementitfreies, bainitisches Gefüge mit Gefügeanteilen von Martensit und Austenit. Das Dokument EUR 21245 aus 2005, der Abschlussbericht des EU Projekts "technical steel research" - "Quantitative structure-property relationships for complex bainitic microstructures" bezeichnet diese kohlenstoffarmen Stähle (C kleiner 0.10%) auch als "Granular Bainite".

Aufgabe der vorliegenden Erfindung ist es, eine Gewindespindel für den Einsatz in Mutter-Spindel-Systemen bzw. einem Kugelgewindetrieb vorzuschlagen, welche den Stand der Technik verbessert, insbesondere eine hohe Endfestigkeit erlaubt bei gleichzeitig vereinfachter Herstellung.

### BESCHREIBUNG DER ERFINDUNG

Die Erfindung geht aus von einem bainitischem Stahl bzw. einem Stahl mit bainitischem Gefüge, dessen Ausgangsfestigkeit Rₘ im gezogenen Zustand als Draht typischerweise bei 700 bis 900 MPa liegt, also gut 20-30% über einem Ausgangsmaterial (Kaltumformstahl) gemäss Stand der Technik. Dieser bainitische Stahl wird in einem nach dem Stand der Technik grundsätzlich bekannten Umformverfahren in eine Gewindespindel umgeformt, was durch Fliesspressen bzw. Rollen geschehen kann.

Bekanntermassen findet beim plastischen Umformen von Metallen (Kaltumformung, Kaltmassivumformung) unterhalb der Rekristallisationstemperatur des Materials eine Kaltverfestigung statt, die die Werkstofffestigkeit kontinuierlich erhöht und die Duktilität verringert. Der Fachmann geht davon aus, dass in Bereichen mit hohem Umformgrad die resultierende Festigkeit höher ist als in Bereichen mit geringerem Umformgrad. Eine Messung der Festigkeit kann beispielsweise mit der bekannten Vickers-Härteprüfung an der Bauteiloberfläche erfolgen. Die Härte eines Werkstoffs ist jedoch nicht streng mit der Festigkeit eines Werkstoffs an sich korreliert, insbesondere bei kaltumgeformten Bauteilen. Im vorliegenden Fall macht eine Vickers-Härteprüfung dennoch Sinn, weil damit gezielt die bei Gewindespindeln geforderte Oberflächenhärte messbar wird. In einem Quer- oder Längsschliff lassen sich zudem ohne weiteres Material-Härtewerte auch aus dem Bauteilinneren ermitteln, was z.B. erlaubt, einen Härteverlauf über den Querschnitt darzustellen.

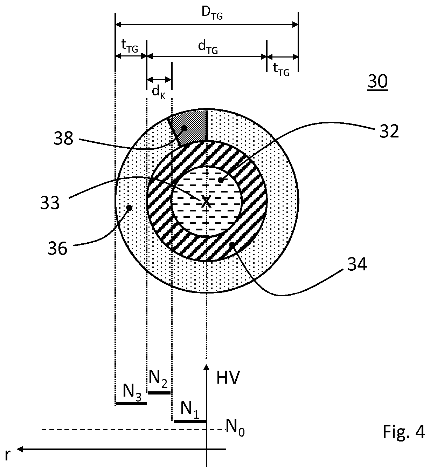

Entgegen der Lehre im Stand der Technik hat sich gezeigt, dass so bei der Herstellung einer Gewindespindel, insbesondere einer Trapezgewindespindel, die höchste Härte nicht im Bereich des Gewindezahns erreicht wird, wo der stärkste Umformgrad stattfindet. Messungen an der Gewindeflanke ergaben Werte die geringer sind als am Gewindegrund. Da erfindungsgemäss die Gewindespindel ohne abschliessende Wärmebehandlung / Härtung erfolgt, bleiben diese Eigenschaften erhalten und ergeben eine Gewindespindel mit neuen, vorteilhaften Eigenschaften:
Wie in Figur 4 skizziert, wird im Mittenbereich 32 einer Gewindespindel 30, sprich in einem Volumen um die zentralen Längsachse 33 des Bauteils, die Festigkeit des Grundmaterials weitgehend erhalten bzw. erhöht, aber, über gesamte Spindel betrachtet, dennoch am geringsten sein. Im Randbereich, genauer in einem Volumenbereich vom Kerndurchmesser d_{TG} der Gewindespindel (Gewindegrund) nach innen (= Kernschale 34), erreichen die Härtewerte ein Maximum. Im (Volumen)Bereich des Gewindezahns bzw. Gewindezuges 36, gemessen an der Gewindeflanke, erreicht die Härte Werte zwischen diesen beiden Extremen.

Figur 4 zeigt dies mit einem Härtediagramm, das schematisch die Härteniveaus N₀ bis N₃ und ihre Zuordnung in der Gewindespindel zeigt. N₀ bezeichnet das Ausgangsniveau, die Grundhärte oder Grundfestigkeit des Materials im nicht umgeformten Ausgangszustand. N₁ bezeichnet das Härteniveau im Mittenbereich 32, N₂ die Härte in der Kernschale 34 und N₃ das Härteniveau im Gewindezug 36. Diese Darstellung ist rein schematisch und zeigt keine absoluten Werte oder relativen Abstände.

Es versteht sich von selbst, dass die Kernschale 34 keine scharfe Grenze zum Mittenbereich 32 bzw. zum Gewindezug 36 besitzt sondern fliessende Übergänge. Im Zuge einer Abgrenzung soll daher als Kernschale 34 derjenige zylindrische, konzentrische Volumenbereich gelten, der, vom Gewindegrund ausgehend radial nach innen die Dicke d_{K} besitzt. Es hat sich gezeigt, dass d_{K} = t_{TG} die physikalischen Verhältnisse sehr gut beschreibt. Mit anderen Worten, die Kernschale 34 einer gegebenen Gewindespindel ist (radial gemessen) so stark wie das Gewinde hoch ist. In der Kernschale 34 erreichen die Härtewerte der gegebenen Spindel ein Maximum.

Bei allen Angaben in dieser Beschreibung, wo Werte miteinander verglichen und/oder in Relation gesetzt werden, versteht es sich von selbst, dass jeweils Durchschnittswerte von mehreren Proben in statistischer Signifikanz miteinander verglichen werden. Es ist im Stand der Technik bekannt, dass Messwerte, hier Härtemesswerte nach Vickers, die den gemachten Aussagen zugrunde liegen, streuen werden und dass daher einzelne Messungen ausreissen können. Das beeinträchtigt jedoch nicht die Aussagekraft der Erfindung und stellt auch keinen Mangel an Ausführbarkeit dar.

Eine Gewindespindel gemäss Erfindung besitzt also einen messbar härteren, Zylindermantel-förmigen Materialbereich, die Kernschale 34. Sie ist konzentrisch um den duktileren Mittenbereich 32 angeordnet. Der Gewindezug 36 selbst ist härter als das Ausgangsmaterial und der Mittenbereich 32, aber duktiler als die Kernschale 34. Dabei hat es sich gezeigt, dass der Unterschied in den Härtewerten zwischen der Kernschale 34 und dem Mittenbereich 32 nicht immer gleich stark ausgeprägt ist. Bei einer Spindel mit einem im Vergleich zum Kerndurchmesser d_{TG} "hohen" Gewinde t_{TG} wird der Mittenbereich stärker verfestigt als bei einer Spindel, bei der ein dickerer Kern ein niedriges Gewinde trägt.

Eine erfinderische Gewindespindel besitzt mehrere Vorteile. Eine Gewindespindel 30 der vorgestellten Art kann durch ihren Aufbau die im Betrieb auftretenden Kräfte besser ableiten als eine klassisch hergestellte Spindel mit durchgängig gehärtetem Aufbau. Die konzentrisch-zylindrische Kernschale leitet die Kräfte aufgrund ihrer hohen Härte ab, gleichzeitig ist das Bauteil als Ganzes elastischer als ein homogen hartes, stabförmiges Bauteil. Der gegenüber dem Ausgangsmaterial durch die Kaltumformung kaltverfestigte Gewindegrat muss zudem die auftretenden Belastungen nicht weit ableiten, denn diese können vorwiegend von der Kernschale aufgenommen werden.

Diese unterschiedlichen Härten bzw. Festigkeiten werden erfindungsgemäss dadurch erzielt, dass nur Kaltumformprozesse auf den Rohling angewendet werden und nach der Herstellung der Gewindespindel kein Härteprozess anschliesst. Unter Härteprozess seien dabei die üblichen, bekannten, technischen Verfahren gemeint mit denen das Gefüge des Rohlings durch thermische Behandlung zu grösserer Festigkeit hin verändert werden. Die Kaltverfestigung selber sei hierbei nicht als Härteprozess verstanden, sondern als Teil des Umformprozesses bei der Herstellung.

Eine Auswertung der Härtewerte nach Vickers für eine Gewindespindel gemäss der Erfindung wurde, um die Vergleichbarkeit gewährleisten, normiert, wobei die Ausgangshärte des nicht umgeformten Materials mit 100 festgelegt wurde. Damit wird auch sichergestellt, dass die Grösse der Prüfkraft bei der Vickers-Härtemessung keine Rolle mehr spielt, solange die Vergleichbarkeit der Werte untereinander gegeben ist.
Die normierten Werte zeigen die folgende Tabelle:

| Bezugsniveau, vgl. Fig. 4 | Normierte Härte | Schwankung (absolut) | Schwankung (in % um den lokalen Wert) |
|---|---|---|---|
| N₀, Ausgangsmaterial | 100 | | |
| N₁, Mittenbereich 32 | 115 | +/- 8; (107-123) | +/- 7 |
| N₂, Kernschale 34 | 132 | +/- 7; (125-139) | +/- 5 |
| N₃, Gewindezug 36 | 122 | +/- 6; (116-128) | +/- 5 |

In einer bevorzugten Ausführungsform lässt sich eine Gewindespindel gemäss Erfindung auch mit engeren Schwankungsbreiten für N₁, N₂, N₃ realisieren, nämlich +/- 4.5%, +/- 3% und +/- 3%.

In anderer Betrachtungsweise lassen sich die Härteniveaus der erfinderischen Gewindespindel auch in Relation zueinander beschreiben, wobei nachfolgend die normierte Härte der Kernschale 34 zu 100% gewählt wurde.

Der Gewindezug 36 ist, in Vickers-Härten ermittelt, zwischen 3% bis 12%, bevorzugt im Mittel 7.5% duktiler als die Kernschale 34.

Der Mittenbereich 32 ist, in Vickers-Härten ermittelt, zwischen 7% bis 19%, bevorzugt im Mittel 13% duktiler als die Kernschale 34.

Die Härtewerte der Gewindespindel im Mittenbereich 32 sind relativ zur Ausgangshärte des bainitischen Stahls (vor der Umformung) zwischen 7% und 23% höher als die Härten des bainitischen Ausgangsmaterials.

In einer bevorzugten Ausführungsform wird als bainitischer Stahl die Stahlsorte 7MnB8 gewählt.

In einer Ausführungsform einer erfindungsgemässen Gewindespindel betrug der Aussendurchmesser D_{TG} einer Trapezgewindespindel 8mm bei einem Kerndurchmesser d_{TG} von 6.2mm. Die Gewindetiefe t_{TG} betrug daher 0.9mm. Der Gewindeflankenwinkel α_{TG} wurde im vorliegenden Fall zu 30° gewählt. Die Steigung s_{TG} beträgt 1.5mm.

Im vorliegenden Ausführungsbeispiel beträgt das Verhältnis von b_{TG} zu t_{TG} ungefähr 2 : 3. Das vorbeschrieben Verhalten mit unterschiedlichen Härten ist über einen weiten Bereich zwischen 1:3 und 3:1 einstellbar.

In alternativer Formulierung kann die Erfindung als Verwendung eines bainitischen Stahls zur Herstellung einer Gewindespindel 20 bzw. 30 beschrieben werden. Ein Rohling aus bainitischem Stahl wird durch einen ein- oder mehrstufigen Kaltumformprozess in eine Gewindespindel 20 so umgeformt, dass der Gewindezug 36, in Vickers-Härten ermittelt, zwischen 3% bis 12%, bevorzugt im Mittel 7.5% duktiler als die Kernschale 34. Ferner wird der Mittenbereich 32, in Vickers-Härten ermittelt, zwischen 7% bis 19%, bevorzugt im Mittel 13% duktiler als die Kernschale 34.

Wie oben beschrieben schliesst diese Verwendung ein, dass die Herstellung der Gewindespindel 20 allein durch Kaltumformungsprozesse ohne anschliessende Härteprozess der Gewindespindel 20 erzielt wird. Ferner kann die Gewindespindel mindestens einen weiteren Bereich 22, 26 mit einer Oberfläche aufweisen, dessen Vickers Härte von der Härte im ersten Bereich 24 abweicht.

### KURZBEZEICHNUNG DER FIGUREN

Figur 1 zeigt einen Längsschnitt durch den oberflächennahen Bereich eines Regelgewindes.
Figur 2 zeigt einen Längsschnitt durch den oberflächennahen Bereich eines Trapezgewindes.
Figur 3 zeigt schematisch eine Gewindespindel mit verschiedenen Bereichen mit verschiedenen Härtezonen.
Figur 4 zeigt einen schematischen Querschnitt durch eine Gewindespindel, entlang der durch das Detail S angedeuteten Linie in Figur 2

### BESCHREIBUNG DER FIGUREN

Die Figuren 1 und 2 zeigen Gewindeformen und ihre Merkmale und wurden bereits oben im Abschnitt Stand der Technik erläutert.

Figur 3 zeigt schematisch eine Gewindespindel 20 mit verschiedenen Bereichen 22, 24, 26. Damit sind Abschnitte des Bauteils gemeint, die unterschiedliche Funktionen, Grössen und Oberflächenbeschaffenheit aufweisen können. Ein erster Bereich 24 weist zum Beispiel ein Gewinde 28 auf, während ein weitere Bereich 26 eine zylindrische Aussenkontur aufweist. In einem dritten Bereich 22 ist eine rotationssymmetrische Form angedeutet, zum Beispiel ein Kraftangriff.

Figur 4 zeigt eine Trapezgewindespindel im Querschnitt, entlang der in Figur 2 angedeuteten Linie S. In der Draufsicht durch den Querschnitt bezeichnet das Merkmal 36 den Gewindezug in Seitenansicht, sichtbar ist die Gewindeflanke bei 38 in der Schnittebene. Der Mittenbereich 32 der Gewindespindel 30 ist ein um die zentrale Mittenachse 33 gruppiertes (Teil-)Volumen der Gewindespindel. Das hülsenförmige Volumen 34 (Kernschale) ist geometrisch gesehen ein Zylindermantelvolumen konzentrisch zur Mittenachse 33.

Die in der vorstehenden Beschreibung, in den Zeichnungen sowie in den Ansprüchen offenbarten Merkmale der Erfindung können sowohl einzeln als auch in beliebiger, jedoch technisch sinnvoller bzw. vorteilhafter Kombination für die Verwirklichung der Erfindung wesentlich sein.

### BEZUGSZEICHENLISTE

- 10: Regelgewinde (RG) / Spitzgewinde
- 11, 16: Gewindezahn
- 12, 17: Gewindeflanke
- 13, 18: Gewindegrund
- 14, 19: Gewindespitze
- 15: Trapezgewinde (TG)

- 20: Spindelmutter
- 22: dritter Abschnitt
- 24: erster Abschnitt
- 26: zweiter Abschnitt
- 28: Gewinde

- 30: Gewindespindel
- 32: Mittenbereich
- 33: zentrale Längsachse bzw. Mittenachse
- 34: Kernschale
- 36: Gewindezug
- 38: Gewindeflanke in der Schnittebene

## Patentansprüche

1. Gewindespindel (20, 30), mit mindestens einem im Wesentlichen zylindrischen, einen Gewindezug (36) tragenden ersten Bereich (24),
**dadurch gekennzeichnet, dass**
• ein Rohling für die Gewindespindel (20, 30) aus bainitischem Stahl besteht,
• im ersten Bereich (24) eine Kernschale (34) definiert wird als ein zylindermantelförmiger Volumenbereich, der vom Kerndurchmesser ( d_{TG}) der Gewindespindel radial nach innen reicht und eine Stärke (d_{K}) besitzt, die der Gewindehöhe (t_{TG}) entspricht,
• der Gewindezug (36), in Vickers-Härten an den Gewindeflanken (17) gemessen, zwischen 3% bis 12%, bevorzugt im Mittel 7.5% duktiler ist als die der in einem Querschliff ermittelten Vickers-Härten der Kernschale (34).

2. Gewindespindel (20, 30) nach Anspruch 1, **dadurch gekennzeichnet, dass**
• ein zylindrischer Mittenbereich (32) definiert wird, der sich von einer zentralen Längsachse (33) der Gewindespindel (30) bis zu einem Kernbereich erstreckt,
• dessen Vickers-Härten zwischen 7% bis 19%, bevorzugt im Mittel 13% niedriger sind als die der Kernschale (34).

3. Gewindespindel (20, 30) nach Anspruch 1 oder
2, **dadurch gekennzeichnet, dass** die Härtewerte der Gewindespindel im Mittenbereich (32) relativ zu einer Ausgangshärte des bainitischen Stahls zwischen 7% und 23% höher sind als die Härten eines bainitischen Ausgangsmaterials.

4. Gewindespindel (20, 30) nach Anspruch 1 bis 3, **dadurch gekennzeichnet, dass** die genannten Härten allein durch Kaltumformungsprozesse ohne anschliessenden bzw. abschliessenden Härteprozess der Gewindespindel erreicht werden.

5. Gewindespindel (20, 30) nach Anspruch 1 bis 4, **dadurch gekennzeichnet, dass** der genannte Stahl 7MnB8 ist.

6. Gewindespindel (20, 30) nach Anspruch 1 bis 5, **dadurch gekennzeichnet, dass** die Gewindespindel ein Regelgewinde trägt.

7. Gewindespindel (20, 30) nach Anspruch 1 bis 5, **dadurch gekennzeichnet, dass** die Gewindespindel ein Trapezgewinde trägt.

8. Gewindespindel (20, 30) nach Anspruch 7, **dadurch gekennzeichnet, dass** das Verhältnis von Breite des Gewindezahns (b_{TG}) zur Gewindetiefe (t_{TG}), zwischen 1:3 und 3:1 liegt.

9. Verwendung eines Rohlings aus bainitischem Stahl in einem ein- oder mehrstufigen Kaltumformprozess zur Herstellung einer Gewindespindel (20, 30) nach Anspruch 1 bis 8.

10. Verwendung nach Anspruch 9, **dadurch gekennzeichnet, dass** der Mittenbereich (32), in Vickers-Härten ermittelt, zwischen 7% bis 19%, bevorzugt im Mittel 13% duktiler ist als die Kernschale (34).

## Claims

1. A threaded spindle (20, 30), having at least one substantially cylindrical first region (24) carrying a thread groove (36),
**characterized in that**
• a blank for the threaded spindle (20, 30) is made of bainitic steel,
• in the first region (24), a core shell (34) is defined as a cylinder-jacket-shaped volume region which extends radially inwards from the core diameter (d_{TG}) of the threaded spindle and has a thickness (d_{K}) which corresponds to the thread height (t_{TG}),
• the thread groove (36), measured in Vickers hardnesses on the thread flanks (17), is between 3% and 12%, preferably 7.5% on average, more ductile than the core shell (34), determined in Vickers hardnesses in a cross-section polish.

2. The threaded spindle (20, 30) according to claim 1, **characterized in that**
• a cylindrical central region (32) is defined which extends from a central longitudinal axis (33) of the threaded spindle (30) to a core region,
• Vickers hardnesses thereof are between 7 % to 19 %, preferably 13 % on average, lower than those of the core shell (34).

3. The threaded spindle (20, 30) according to claim 1 or 2, **characterized in that** relative to a initial hardness of the bainitic steel, the hardness values of the threaded spindle in the central region (32) are between 7% and 23% higher than the hardnesses of a bainitic starting material.

4. The threaded spindle (20, 30) according to claims 1 to 3, **characterized in that** the mentioned hardnesses are achieved solely by cold forming processes without a subsequent or final hardening process of the threaded spindle.

5. The threaded spindle (20, 30) according to claims 1 to 4, **characterized in that** the mentioned steel is 7MnB8.

6. The threaded spindle (20, 30) according to claims 1 to 5, **characterized in that** the threaded spindle carries a standard thread.

7. The threaded spindle (20, 30) according to claims 1 to 5, **characterized in that** the threaded spindle carries a trapezoidal thread.

8. The threaded spindle (20, 30) according to claim 7, **characterized in that** the ratio of the width of the thread tooth (b_{TG}) to the thread depth (t_{TG})is between 1:3 and 3:1.

9. Use of a blank made of bainitic steel in a single-stage or multi-stage cold forming process for producing a threaded spindle (20, 30) according to claims 1 to 8.

10. The use according to claim 9, **characterized in that** the central region (32), determined in Vickers hardnesses, is between 7% to 19%, preferably 13% on average, more ductile than the core shell (34).

## Revendications

1. Broche filetée (20, 30) avec au moins une première zone (24) pour l'essentiel cylindrique, portant un filetage (36),
**caractérisée en ce**
• **qu'**il existe une ébauche en acier bainitique pour la broche filetée (20, 30),
• **qu'**une coque de noyau (34) est définie dans la première zone (24) en tant qu'une zone de volume en forme d'enveloppe cylindrique, qui va du diamètre de noyau (d_{TG}) de la broche filetée radialement vers l'intérieur et possède une épaisseur (d_{K}), qui correspond à la hauteur de filetage (t_{TG}),
• **que** le filetage (36), mesuré en duretés Vickers sur les flancs de filet (17), est entre 3 % à 12 %, de préférence en moyenne 7,5 % plus ductile que les duretés Vickers de la coque de noyau (34) déterminées dans une coupe de rectification transversale.

2. Broche filetée (20, 30) selon la revendication 1, **caractérisée en ce qu'**
• une zone centrale cylindrique (32) est définie, qui s'étend d'un axe longitudinal central (33) de la broche filetée (30) jusqu'à une zone de noyau,
• dont les duretés Vickers sont entre 7 % à 19 %, de préférence en moyenne 13 %, plus faibles que la coque du noyau (34).

3. Broche filetée (20, 30) selon la revendication 1 ou 2, **caractérisée en ce que** les valeurs de dureté de la broche filetée se situent dans la zone centrale (32) par rapport à une dureté initiale d'acier baïnitique entre 7 % et 23 % plus élevées que les duretés d'un matériau initial baïnitique.

4. Broche filetée (20, 30) selon les revendications 1 à 3, **caractérisée en ce que** les duretés citées ne sont obtenues que par des processus de formage à froid sans processus de trempe successif ou final de la broche filetée.

5. Broche filetée (20, 30) selon les revendications 1 à 4, **caractérisée en ce que** l'acier cité est de l'acier 7MnB8.

6. Broche filetée (20, 30) selon les revendications 1 à 5, **caractérisée en ce que** la broche filetée porte un filetage à gros pas.

7. Broche filetée (20, 30) selon les revendications 1 à 5, **caractérisée en ce que** la broche filetée porte un filetage trapézoïdal.

8. Broche filetée (20, 30) selon la revendication 7 **caractérisée en ce que** le rapport entre la largeur de la dent de filetage (b_{TG}) et la profondeur de filetage (t_{TG})se situe entre 1:3 et 3:1.

9. Utilisation d'une ébauche en acier bainitique dans un processus de formage à froid à étapes multiples pour la fabrication d'une broche filetée (20, 30) selon les revendications 1 à 8.

10. Utilisation selon la revendication 9 **caractérisée en ce que** la zone centrale (32) définie en duretés Vickers, est entre 7 % à 19 %, de préférence en moyenne 13 % plus ductile que la coque de noyau (34).
